# EUROPEAN PATENT SPECIFICATION

(11) **EP 3 603 930 B1**
(45) Date of publication and mention of the grant of the patent: **11.05.2022**
(21) Application number: 18778263.6
(22) Date of filing: 27.03.2018
(51) Int. Cl.: B29C 45/66, B29C 45/03

(54) **INJECTION MOLDING MACHINE**
SPRITZGIESSMASCHINE
MACHINE DE MOULAGE PAR INJECTION

(30) Priority: 27.03.2017 JP 2017061955
(43) Date of publication of application: 05.02.2020
(73) Proprietor: Sumitomo Heavy Industries, Ltd., Tokyo 141-6025 (JP)
(72) Inventor: MIYATAKE, Tsutomu, Chiba-shi Chiba 263-0001 (JP)
(74) Representative: Louis Pöhlau Lohrentz
(86) International application number: PCT/JP2018/012491
(87) International publication number: WO 2018/181353

(56) References cited:
- WO-A1-2007/041881
- JP-A- 2001 322 151
- JP-A- 2003 025 057
- JP-A- 2009 166 327
- JP-A- 2016 013 633
- JP-A- 2016 013 633

## Description

### Technical Field

The present invention relates to an injection molding machine.

### Background Art

A mold clamping unit of an injection molding machine described in PTL 1 includes a bar which is disposed in a toggle support and a crosshead which is disposed to be movable forward or rearward along the bar, in which a movable platen is moved forward or rearward by moving the crosshead forward or rearward, and thus, a mold is closed, clamped, or opened. The bar is inserted into a through-hole which penetrates the crosshead in a forward-rearward direction. PTL 2 discloses an injection molding machine which includes a toggle mechanism having a link group, a toggle support body, and a crosshead. PTL 3 discloses an electric mold clamping device which includes a toggle mechanism having a link group, a crosshead which can freely move forward or backward, and a rod which is attached to the outside of the crosshead. PTL 4 discloses a mold apparatus which includes an opening/closing mechanism performing opening/closing of a mold, a crosshead which is movable forward or backward, and a guide member supporting mechanism supporting a guide member which guides the crosshead.

### Citation List

### Patent Literature

[PTL 1] Japanese Unexamined Patent Publication No. 10-315285
[PTL 2] International Publication No. WO 2007/041881 A1
[PTL 3] Japanese Unexamined Patent Publication No. 2001-322151
[PTL 4] Japanese Unexamined Patent Publication No. 2016-013633

### Summary of Invention

### Technical Problem

In the related art, a bar which guides a crosshead is easily bent and the crosshead may be inclined.

The present invention is made in consideration of the above-described problems, and an object thereof is to provide an injection molding machine capable of suppressing an inclination of the crosshead.

### Solution to Problem

In order to achieve the object, according to an aspect of the present invention, there is provided an injection molding machine including a toggle mechanism; and a toggle support which supports the toggle mechanism. The toggle mechanism includes a crosshead and a link group which is operated by a forward or rearward movement of the crosshead, and the toggle support includes a toggle support body portion to which a link of the link group is oscillatingly attached and toggle support arm portions which guide the crosshead. When viewed in a forward or rearward movement direction of the crosshead, the toggle support arm portions come into contact with the crosshead from an outside and in line symmetry about a straight line passing through a center of the crosshead and extending in a vertical direction.

### Advantageous Effects of Invention

According to an aspect of the present invention, an injection molding machine capable of suppressing an inclination of a crosshead is provided.

### Brief Description of Drawings

Fig. 1 is a view showing a state when a mold opening of an injection molding machine according to an embodiment is completed.
Fig. 2 is a view showing a state when a mold of the injection molding machine according to the embodiment is clamped.
Fig. 3 is a cross-sectional view showing a main portion of a mold clamping unit according to the embodiment and a cross-sectional view taken along line III-III of Fig. 4.
Fig. 4 is a cross-sectional view taken along line IV-IV of Fig. 3.
Figs. 5A and 5B are views showing yawing of a crosshead according to the embodiment.
Figs. 6A and 6B are cross-sectional views showing a member which is provided between a toggle support body portion and a connection bar shown in Fig. 1.
Figs. 7A to 7C are cross-sectional views showing a modification example of toggle support arm portion shown in Fig. 3.
Figs. 8A and 8B are views showing a crosshead and a toggle support according to a fourth modification example.
Figs. 9A and 9B are cross-sectional views taken along line IX-IX of Fig. 8A.
Figs. 10A and 10B are views showing a modification example of a motion conversion mechanism shown in Fig. 1.
Figs. 11A and 11B are cross-sectional views showing a state where inclinations of the crosshead shown in Fig. 3 and a crosshead of a modification example thereof are suppressed by a toggle support arm portion.

### Description of Embodiments

Hereinafter, an embodiment of the present invention is described with reference to the drawings. In each drawing, the same or corresponding reference numerals are assigned to the same or corresponding configurations, and descriptions thereof are omitted. In each drawing, a Z direction (first direction), a Y direction (second direction), and an X direction (third direction) are directions perpendicular to each other. The Z direction is forward or rearward movement direction of a crosshead 151 and the X direction is a width direction of the injection molding machine. In a case where a mold clamping unit is a horizontal type mold clamping unit, the Z direction and the X direction are a horizontal direction, and the Y direction is upward-downward direction (vertical direction).

### (Injection Molding Machine)

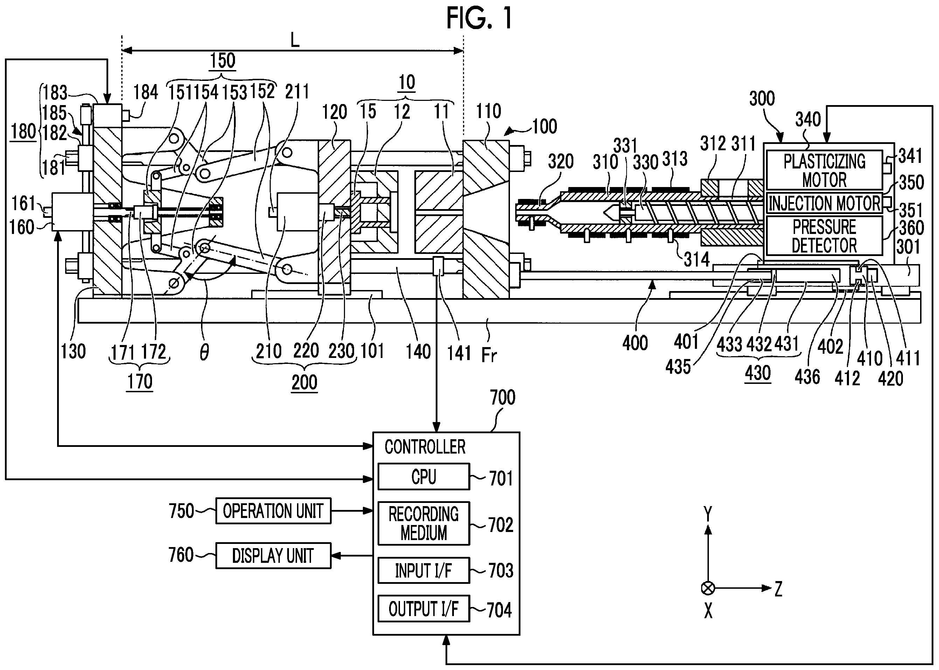

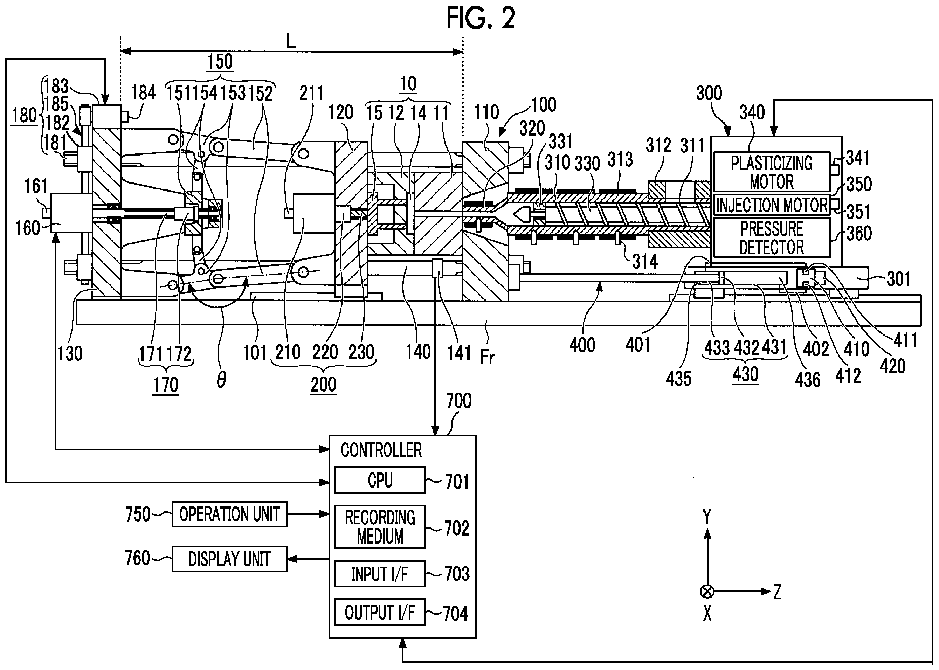

Fig. 1 is a view showing a state when a mold opening of an injection molding machine according to an embodiment is completed. Fig. 2 is a view showing a state when a mold of the injection molding machine according to the embodiment is clamped. As shown in Figs. 1 and 2, the injection molding machines include a mold clamping unit 100, an ejector unit 200, an injection unit 300, a movement unit 400, a controller 700, and a frame Fr. Hereinafter, each component of the injection molding machine will be described.

### (Mold Clamping Unit)

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 10. For example, the mold clamping unit 100 is a horizontal type clamping unit and mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame Fr. A stationary mold 11 is attached to a surface of the stationary platen 110 facing the movable platen 120.

The movable platen 120 is movable in the mold opening and closing directions with respect to the frame Fr. A guide 101 which guides the movable platen 120 is placed on the frame Fr. A movable mold 12 is attached to a surface of the movable platen 120 facing the stationary platen 110.

The movable platen 120 moves forward or rearward with respect to the stationary platen 110, and thus, closing, clamping, and opening of the mold are performed. The mold unit 10 includes the stationary mold 11 and the movable mold 12.

The toggle support 130 is connected so as to be separated from the stationary platen 110, and is placed on the frame FR to be movable in mold opening and closing directions. In addition, the toggle support 130 may be movable along a guide which is placed on the frame Fr. The guide of the toggle support 130 may be also used as the guide 101 of the movable platen 120.

In addition, in the present embodiment, the stationary platen 110 is fixed to the frame Fr, and the toggle support 130 is movable in the mold opening and closing directions with respect to the frame Fr. However, the toggle support 130 may be fixed to the frame Fr, and the stationary platen 110 may be movable in the mold opening and closing directions with respect to the frame Fr.

The stationary platen 110 and the toggle support 130 are connected to each other with a gap L in the mold opening and closing directions by the tie bar 140. A plurality of (for example, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/stretchably connected to each other by pins or the like . The first link 152 is oscillatingly attached to the movable platen 120 by pins or like and the second link 153 is oscillatingly attached to the toggle support 130 by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be coupled to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the controller 700.

In the mold closing process, the mold clamping motor 160 is driven to move the crosshead 151 forward to a mold closing completion position at a set speed. Accordingly, the movable platen 120 moves forward and the movable mold 12 comes into contact with the stationary mold 11. For example, a position or speed of the crosshead 151 is detected using a mold clamping motor encoder 161 or the like. The mold clamping motor encoder 161 detects the rotation of the mold clamping motor 160 and sends a signal indicating the detection result to the controller 700. In addition, a crosshead position detector which detects the position of the crosshead 151 and a crosshead speed detector which detects the speed of the crosshead 151 is not limited to the mold clamping motor encoder 161, and a general detector can be used. In addition, a movable platen position detector which detects the position of the movable platen 120 and a movable platen speed detector which detects the speed of the movable platen 120 are not limited to the mold clamping motor encoder 161, and a general detector can be used.

In the mold clamping process, the mold clamping motor 160 is further driven to further move the crosshead 151 forward from the mold closing completion position to a mold clamping position, and thus, a mold clamping force is generated. When the mold is clamped, a cavity space 14 (refer to Fig. 2) is formed between the movable mold 12 and the stationary mold 11, and the cavity space 14 is filled with a liquid molding material by the injection unit 300. A filled molding material is solidified, and thus, a molding product can be obtained. A plurality of cavity spaces 14 may be provided, and in this case, a plurality of molding products can be simultaneously obtained.

In the mold opening process, the mold clamping motor 160 is driven to move the crosshead 151 rearward to a mold opening completion position at a set speed. Accordingly, the movable platen 120 moves rearward, and the movable mold 12 is separated from the stationary mold 11. Thereafter, the ejector unit 200 ejects the molding product from the movable mold 12.

Setting conditions in the mold closing process and the mold clamping process are collectively set as a series of setting conditions. For example, a speed or positions (including mold opening/closing start position, speed switching position, mold closing completion position, and mold clamping position) of the crosshead 151 and the mold clamping force in the mold closing process and the mold clamping process are collectively set as a series of setting conditions. The mold opening/closing start position, the speed switching position, the mold closing completion position, and the mold clamping position are arranged in this order from the rear side to the front side and indicate start points and end points of sections where the speed is set. The speed is set for each section. The speed switching position may be one or more. The speed switching position may not be set. Only one of the mold clamping position and the mold clamping force may be set. Setting conditions are similarly set in the mold opening process. For example, the speed or positions (mold opening start position, speed switching position, and mold opening completion position) of the crosshead 151 in the mold opening process are collectively set as a series of setting conditions. The mold opening start position, the speed switching position, and the mold opening completion position are arranged in this order from the front side to the rear side and indicate start points and end points of sections where the speed is set. The speed is set for each section. The speed switching position may be one or more. The speed switching position may not be set. The mold opening start position may be the same as the mold clamping position. In addition, the mold opening completion position and the mold opening/closing start position may be the same as each other. In addition, instead of the speed, the positions, or the like of the crosshead 151, a speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 10 is changed by replacement of the mold unit 10, a temperature change of the mold unit 10, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 12 comes into contact with the stationary mold 11 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably held by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated with each other. In addition, it is possible to rotate the plurality of screw nuts 182 individually by changing a transmission path of the rotation transmission portion 185.

For example, the rotation transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotation transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

Moreover, in the present embodiment, the screw nut 182 is rotatably held with respect to the toggle support 130, and the tie bar 140 in which the screw shaft 181 is formed is fixed to the stationary platen 110. However, the present invention is not limited to this.

For example, the screw nut 182 is rotatably held with respect to the stationary platen 110, and the tie bar 140 may be fixed to the toggle support 130. In this case, it is possible to adjust the gap L by rotating the screw nut 182.

In addition, the screw nut 182 may be fixed to the toggle support 130, and the tie bar 140 may be rotatably held with respect to the stationary platen 110. In this case, it is possible to adjust the gap L by rotating the tie bar 140.

Moreover, the screw nut 182 may be fixed to the stationary platen 110, and the tie bar 140 may be rotatably held with respect to the toggle support 130. In this case, it is possible to adjust the gap L by rotating the tie bar 140.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection results of the mold space adjustment motor encoder 184 are used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

The mold space adjustment mechanism 180 rotates one of the screw shaft 181 and the screw nut 182 which are screwed to each other to adjust the gap L. A plurality of mold space adjustment mechanisms 180 may be used, and a plurality of mold space adjustment motor 183 may be used.

In addition, in order to adjust the gap L, the mold space adjustment mechanisms 180 of the present embodiment includes the screw shaft 181 which is formed in the tie bar 140 and the screw nut 182 which is screwed to the screw shaft 181. However, the present invention is not limited to this.

For example, the mold space adjustment mechanisms 180 may have a tie bar temperature controller which adjusts a temperature of the tie bar 140. The tie bar temperature controller is attached to each tie bar 140, and adjusts temperatures of the plurality of tie bars 140 in cooperation with each other. As the temperature of the tie bar 140 increases, the tie bar 140 is lengthened due to the thermal expansion, and thus, the gap L increases. The temperatures of the plurality of tie bars 140 can be independently adjusted.

For example, the tie bar temperature controller includes a heating unit such as a heater, and adjusts the temperature of the tie bar 140 by heating. The tie bar temperature controller may include a cooler such as a water cooling jacket, and may adjust the temperature of the tie bar 140 by cooling. The tie bar temperature controller may include both the heating unit and the cooler.

In addition, the mold clamping unit 100 of the present embodiment is the horizontal type mold clamping unit in which the mold opening and closing directions are the horizontal direction. However, the mold clamping unit 100 may be a vertical type mold clamping unit in which the mold opening and closing directions are the upward-downward direction. The vertical type mold clamping unit has a lower platen, an upper platen, a toggle support, a tie bar, a toggle mechanism, a mold clamping motor, or the like. Any one of the lower platen and the upper platen is used as the stationary platen, and the other is used as the movable platen. A lower mold is attached to the lower platen, and an upper mold is attached to the upper platen. A mold unit is constituted by the lower mold and the upper mold. The lower mold may be attached to the lower platen via a rotary table. A toggle support is disposed below the lower platen and is connected to the upper platen via a tie bar. The tie bar connects the upper platen and the toggle support to each other with a gap in the mold opening and closing directions . The toggle mechanism is disposed between the toggle support and the lower platen, and raises or lowers the movable platen. The mold clamping motor operates the toggle mechanism. When the mold clamping unit is the vertical type mold clamping unit, generally, the number of tie bars is three. Moreover, the number of tie bars is not particularly limited.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is opened is defined as the rear side.

The ejector unit 200 ejects the molding product from the mold unit 10. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 15 which is disposed to be movable forward or rearward inside the movable mold 12. The front end portion of the ejector rod 230 may be connected to the movable member 15 or may not be connected to the movable member 15.

The ejector unit 200 performs an ejection process under the control of the controller 700.

In the ejection process, the ejector motor 210 is driven to move the ejector rod 230 forward from a standby position to an ejection position at a set speed, and thus, the movable member 15 moves forward and the molding product is ejected. Thereafter, the ejector motor 210 is driven to move the ejector rod 230 rearward at a set speed, and thus, the movable member 15 moves rearward to an original standby position. For example, a position or speed of the ejector rod 230 is detected using an ejector motor encoder 211. The ejector motor encoder 211 detects the rotation of the ejector motor 210 and sends a signal indicating a detection result to the controller 700. In addition, an ejector rod position detector which detects the position of the ejector rod 230 and an ejector rod speed detector which detects the speed of the ejector rod 230 are not limited to the ejector motor encoder 211, and a general detector can be used.

### (Injection Unit)

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame Fr, and is movable forward or rearward with respect to the mold unit 10. The injection unit 300 comes into contact with the mold unit 10, and the cavity space 14 inside the mold unit 10 is filled with the molding material. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. For example, the molding material includes a resin or the like. For example, the molding material is formed into pellets and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The controller 700 controls the heating unit 313 such that a detection temperature of the temperature detector 314 for each zone becomes a set temperature.

The nozzle 320 is provided on the front end portion of the cylinder 310 and presses the mold unit 10. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 10 is filled with the liquid molding material.

A backflow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example.

The pressure detector 360 detects a pressure transmitted between the injection motor 350 and the screw 330. The pressure detector 360 is provided on a force transmission path between the injection motor 350 and the screw 330 and detects a pressure applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700.

In the plasticizing process, the plasticizing motor 340 is driven to rotate the screw 330 at a set rotating speed and the molding material is fed forward along the spiral grooves of the screw 330 by the screw 330. According to this, the molding material is gradually melted. The screw 330 moves rearward as the liquid molding material is fed to the front side of the screw 330 and is accumulated in front of the cylinder 310. For example, the rotating speed of the screw 330 is detected using a plasticizing motor encoder 341. The plasticizing motor encoder 341 detects the rotation of the plasticizing motor 340 and sends a signal indicating a detection result to the controller 700. In addition, a screw rotating speed detector which detects the rotating speed of the screw 330 is not limited to the plasticizing motor encoder 341, and a general detector may be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the controller 700. If the screw 330 moves rearward to a plasticizing completion position and a predetermined amount of the molding materials is accumulated in front of the screw 330, the plasticizing process is completed.

In the filling process, the injection motor 350 is driven to move the screw 330 forward at a set speed, and the cavity space 14 inside the mold unit 10 is filled with the liquid molding material accumulated in front of the screw 330. For example, a position or speed of the screw 330 is detected using an injection motor encoder 351. The injection motor encoder 351 detects the rotation of the injection motor 350 and sends a signal indicating a detection result to the controller 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

Moreover, in the filling process, after the position of the screw 330 reaches the set position, the screw 330 may temporarily stop at the set position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw speed detector which detects the speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 10. Insufficient molding materials can be replenished by cooling shrinkage in the mold unit 10. For example, the holding pressure is detected using the pressure detector 360. The pressure detector 360 sends a signal indicating a detection result to the controller 700. A set value of the holding pressure may be changed according to an elapsed time from the starting of the holding pressure process, or the like.

In the holding pressure process, the molding material inside the cavity space 14 in the mold unit 10 is gradually cooled, and when the holding pressure process is completed, an inlet of the cavity space 14 is closed by the molding material which is solidified. This state is referred to as a gate seal, and a backflow of the molding material from the cavity space 14 is prevented. After the holding pressure process, a cooling process starts. In the cooling process, solidification of the molding material in the cavity space 14 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is an upward-downward direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Movement Unit)

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during plasticizing is referred to as a rear side.

The movement unit 400 moves the injection unit 300 forward or rearward with respect to the mold unit 10. In addition, the movement unit 400 presses the nozzle 320 to the mold unit 10 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the controller 700 and by the rotation torque corresponding to the control signal from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 11. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 11.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Controller)

For example, the controller 700 includes a computer, and as shown in Figs. 1 and 2, the controller 700 includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 repeatedly performs the mold closing process, the mold clamping process, the mold opening process, or the like to repeatedly manufacture the molding product. In addition, the controller 700 performs the plasticizing process, the filling process, the holding pressure process, or the like during the mold clamping process. A series of operations to obtain the molding product, for example, an operation from the start of the plasticizing process to the start of the next plasticizing process is also referred to as a "shot" or a "molding cycle". In addition, a time required for once shot is also referred to as a "molding cycle time". For example, the once molding cycle includes the plasticizing process, the mold closing process, the mold clamping process, the filling process, the holding pressure process, the cooling process, the mold opening process, and the ejection process in this order. Here, this order is an order of the start of each process. In the filling process, the holding pressure process, and the cooling process are performed between the start of the mold clamping process to the end of the mold clamping process. The end of the mold clamping process coincides with the start of the mold opening process. In addition, in order to shorten the molding cycle time, the plurality of processes may be simultaneously performed. For example, the plasticizing process may be performed of the cooling process of the previous molding cycle, and in this case, the mold closing process may be performed at an initial stage of the molding cycle. In addition, the filling process may be started during the mold closing process. Moreover, the ejection process may be started during the mold opening process. In a case where an on/off valve which opens and closes the flow path of the nozzle 320 is provided, the mold opening process may be started during the plasticizing process. Accordingly, even when the mold opening process starts during the plasticizing process, if the on/off valve closes the flow path of the nozzle 320, the molding material does not leak from the nozzle 320.

The controller 700 is connected to an operation unit 750 or the display unit 760. The operation unit 750 receives an input operation from a user and outputs a signal corresponding to the input operation to the controller 700. The display unit 760 displays an operation screen corresponding to the input operation of the operation unit 750 under the control of the controller 700.

The operation screen is used for the setting of the injection molding machine or the like. A plurality of operation screens are provided, and thus, are displayed to be switched or to overlap each other. A user operates the operation unit 750 while viewing the operation screen displayed by the display unit 760 to perform the setting (including an input of a set value) of the injection molding machine or the like.

For example, the operation unit 750 and the display unit 760 may include a touch panel to be integrated with each other. In addition, in the present embodiment, the operation unit 750 and the display unit 760 are integrated with each other. In addition, a plurality of operation units 750 may be provided.

### (Crosshead and Peripheral Structure thereof)

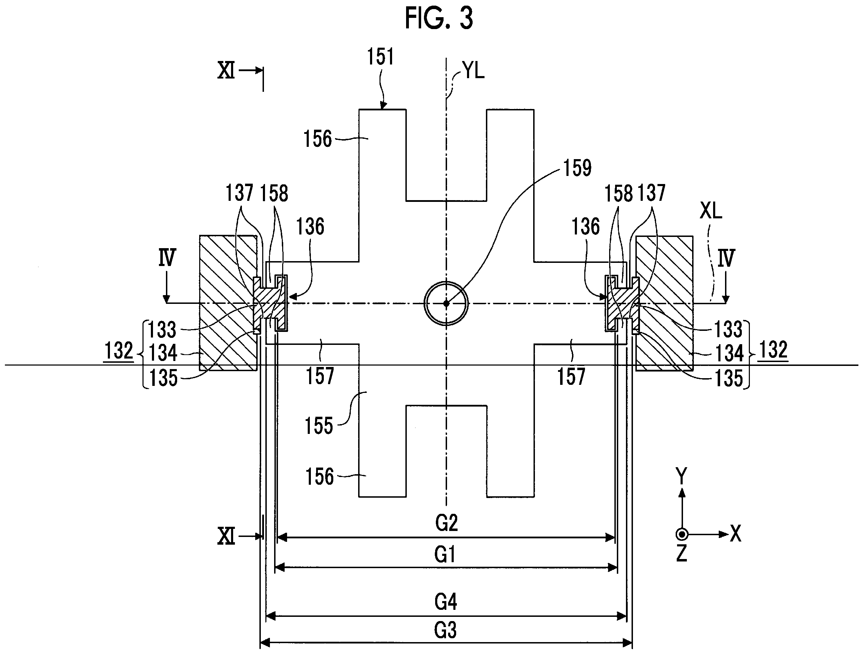

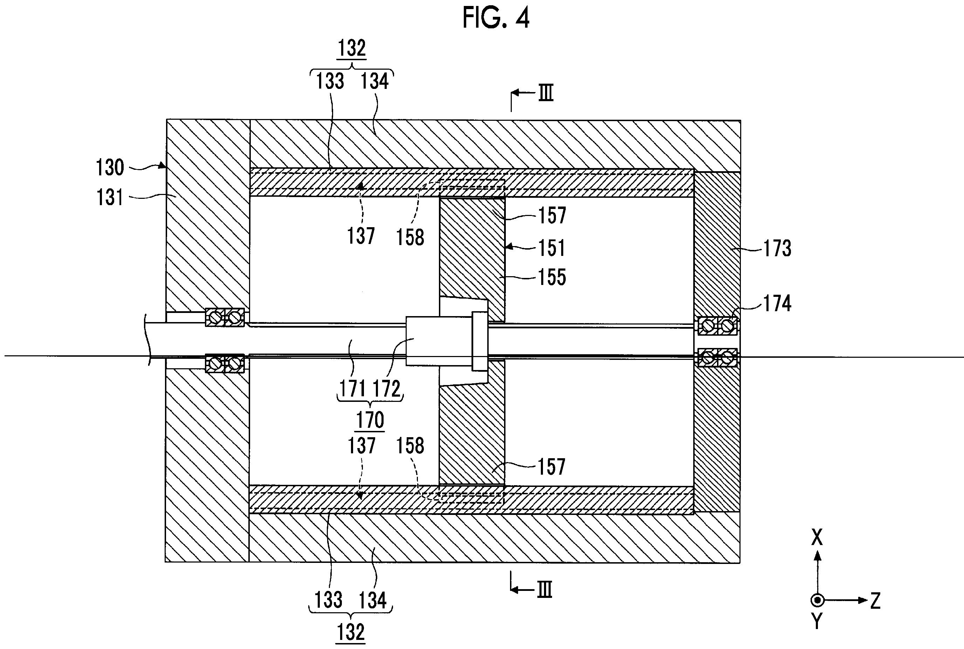

Fig. 3 is a cross-sectional view showing a main portion of the mold clamping unit according to the embodiment and a cross-sectional view taken along line III-III of Fig. 4. Fig. 4 is a cross-sectional view taken along line IV-IV of Fig. 3.

The toggle support 130 includes a toggle support body portion 131 to which the second link 153 (refer to Figs. 1 and 2) is oscillatingly attached and toggle support arm portions 132 which guide the crosshead 151.

The toggle support body portion 131 has a plate-shaped portion which is formed in an approximately rectangular shape when viewed in the Z direction. The plate-shaped portion has a through-hole, into which the screw shaft 171 of the motion conversion mechanism 170 is inserted, in a center portion of the plate-shaped portion. The toggle support body portion 131 may further include a tubular portion which protrudes in one direction (front side) in the Z direction from an outer peripheral edge portion of the plate-shaped portion, in addition to the plate-shaped portion. The tubular portion is formed in a square frame shape when viewed in the Z direction, and forms a space, in which the crosshead 151 moves, inside the tubular portion. As shown in Figs. 1 and 2, in addition to the second link 153, the mold clamping motor 160 or the tie bars 140 are attached to the toggle support body portion 131.

A pair of toggle support arm portions 132 is provided with a gap in the X direction at a center portion of a surface (front surface) of the toggle support body portion 131 facing the movable platen 120 in the Y direction. The pair of toggle support arm portions 132 is provided on both end portions of the toggle support body portion 131 in the X direction. As shown in Fig. 4, each toggle support arm portion 132 protrudes forward from the toggle support body portion 131 and extends straightly in the Z direction. A method for guiding the crosshead 151 by the toggle support arm portions 132 may be any one of sliding guide and rolling guide. As shown in Fig. 3, the pair of toggle support arm portions 132 may be provided with a gap in the X direction across the crosshead 151.

As shown in Fig. 3, each toggle support arm portion 132 includes a guide rail 133 which comes into contact with the crosshead 151 and guides the crosshead 151 and a guide holder 134 which holds the guide rail 133. A guide direction of the guide rail 133 is the Z direction.

As shown in Fig. 4, each guide rail 133 extends straightly in the Z direction. As shown in Fig. 3, each guide rail 133 has recessed portions 137 on both end surfaces in the Y direction. The recessed portion 137 extends straightly in the Z direction. For example, as shown in Fig. 3, a cross-sectional shape of the guide rail 133 perpendicular to the Z direction is an H shape.

Unlike the guide rail 133, the guide holder 134 does not come into contact with the crosshead 151. As shown in Fig. 4, the guide holder 134 extends straightly in the Z direction, and for example, is formed in a plate shape. As shown in Fig. 3, for example, a cross-sectional shape of the guide holder 134 perpendicular to the Z direction is a rectangular shape.

For example, the guide holder 134 has a groove, into which the guide rail 133 is fitted, on a surface perpendicular to the X direction. The entire end surface of the guide rail 133 in the X direction may be fixed to a bottom wall surface of the groove. In addition, a wedge 135 may be driven into a gap between a side wall surface of the groove and the guide rail 133.

The crosshead 151 has a crosshead body portion 155 to which the motion conversion mechanisms 170 is connected, link attachment portions 156 which extend in the Y direction from the crosshead body portion 155 and to which the third links 154 are oscillatingly attached, and slider portions 157 which extend in the X direction from the crosshead body portion 155 and are guided by the toggle support arm portions 132. The crosshead body portion 155, the link attachment portions 156, and the slider portions 157 may be integrally formed with each other by casting or the like.

As shown in Fig. 4 or the like, the motion conversion mechanisms 170 is connected to the crosshead body portion 155. For example, the screw nut 172 of the motion conversion mechanism 170 is fixed to the crosshead body portion 155. For example, the crosshead body portion 155 is formed in a plate shape perpendicular to the Z direction and is formed in a rectangular shape when viewed in the Z direction. When viewed in the Z direction, the motion conversion mechanisms 170 is attached to a center portion of the crosshead body portion 155.

In addition, at the time of the mold clamping or the like, when a rotational moment acts on the crosshead body portion 155, the motion conversion mechanism 170 may be oscillatingly connected to the crosshead body portion 155 by a pin or the like such that the rotational moment is not transmitted to the motion conversion mechanism 170.

As shown in Fig. 3, each link attachment portion 156 protrudes in the Y direction from the crosshead body portion 155. The third link 154 (refer to Figs. 1 and 2) is oscillatingly attached to a distal end portion of the link attachment portion 156 by a pin or the like. A pair of link attachment portions 156 may be provided with a gap in the Y direction across the crosshead body portion 155.

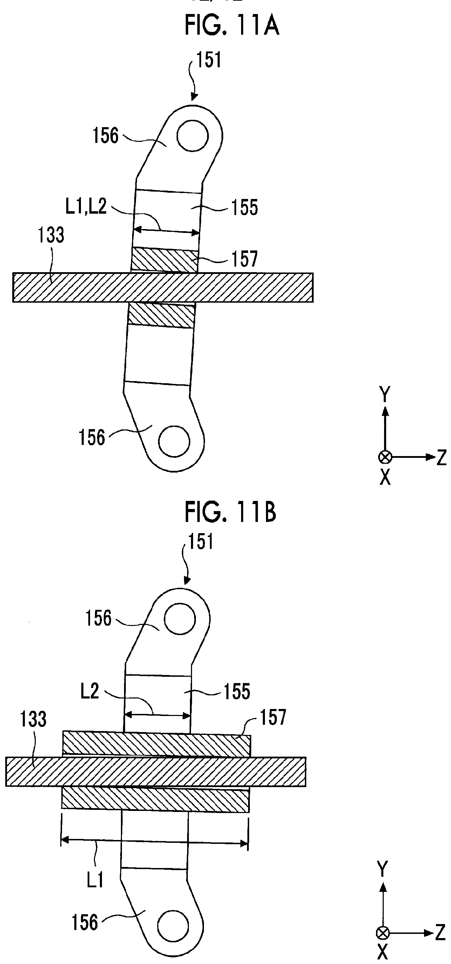

The link attachment portion 156 has a plurality of link attachment plates perpendicular to the X direction with a gap in the X direction. Each link attachment plate extends in the Y direction from both end surfaces of the crosshead body portion 155 in the Y direction. Each link attachment plate extends in the Y direction from both end surfaces of the crosshead body portion 155 in the Y direction, may be inclined in one direction (for example, front side) in the Z direction from an intermediate portion, or may protrude in one direction in the Z direction from the crosshead body portion 155 (refer to Figs. 11A and 11B) . A through-hole penetrating the link attachment plate in the X direction is formed in a distal end portion of each link attachment plate. A pin is inserted into the through-hole, and thus, the third link 154 is oscillatingly attached to the link attachment portion 156 via the pin.

As shown in Fig. 3, each slider portion 157 is guided by the toggle support arm portion 132. A pair of slider portions 157 may be provided with a gap in the X direction across the crosshead body portion 155. The slider portions 157 are provided on both sides in the X direction across the crosshead body portion 155 and are provided at a center portion in the Y direction of both end surfaces of the crosshead body portion 155 in the X direction.

Each slider portion 157 has protrusion portions 158 which sandwich the guide rail 133 from both sides in the Y direction. The protrusion portions 158 of the slider portion 157 move in the Z direction inside the recessed portions 137 of the guide rail 133. For example, as shown in Fig. 3, a cross-sectional shape of the slider portion 157 perpendicular to the Z direction is a C shape.

Meanwhile, the crosshead 151 may be inclined when the mold is clamped due to a loss of balance between the pair of third links 154 provided with a gap in the Y direction. In this case, the crosshead 151 tries to rotate mainly about the X direction. Hereinafter, the rotation about the X direction is also referred to as pitching.

Accordingly, as shown in Fig. 3, each toggle support arm portion 132 comes into contact with the crosshead 151 from the outside when viewed in the Z direction. When viewed in the Z direction, the toggle support arm portion 132 comes into contact with an outer peripheral portion of the crosshead 151 to support and guide the crosshead 151. When viewed in the Z direction, the toggle support arm portion 132 is disposed outside the crosshead 151, and all sides of the guide rail 133 of the toggle support arm portion 132 are not surrounded by the crosshead 151. Accordingly, the guide rail 133 can be reinforced by the guide holder 134, deformation of the guide rail 133 can be suppressed, and thus, the pitching of the crosshead 151 guided by the guide rails 133 can be suppressed. As a result, it is possible to decrease deflection of the screw shaft 171 connected to the crosshead 151, and damages of the screw shaft 171 can be suppressed.

In addition, as shown in Fig. 3, when viewed in the Z direction, each toggle support arm portion 132 comes into contact with the crosshead 151 in line symmetry about a straight line XL (hereinafter also referred to as "horizontal line XL") passing through a center 159 of the crosshead 151 and extending in the X direction.

A location where the toggle support arm portion 132 coming into contact with the crosshead 151 includes a location where both come into temporary contact with each other in addition to a location where both are in always contact with each other. For example, in the present embodiment, a surface of the recessed portion 137 which comes into contact with the protrusion portion 158 is a location where the toggle support arm portion 132 comes into contact with the crosshead 151.

As described above, when viewed in the Z direction, the toggle support arm portion 132 comes into contact with the crosshead 151 in line symmetry about the horizontal line XL. Accordingly, a friction force between the crosshead 151 and the toggle support arm portion 132 is symmetrically generated about the horizontal line XL, and thus, it is possible to suppress the pitching of the crosshead 151 generated by the friction force.

Moreover, as shown in Fig. 3, when viewed in the Z direction, the toggle support arm portions 132 come into contact with the crosshead 151 in line symmetry about a straight line YL (hereinafter, also referred to as a "vertical line YL") passing through the center 159 of the crosshead 151 and extending in the Y direction. Accordingly, the friction force between the crosshead 151 and the toggle support arm portion 132 is symmetrically generated about the vertical line YL, and thus, it is possible to suppress yawing of the crosshead 151 generated by the friction force. The yawing is a rotation about the Y direction.

As shown in Fig. 3, the guide rail 133 of the toggle support arm portion 132 may include a retaining portion 136 which prevents the crosshead 151 from coming off in the X direction from the toggle support arm portion 132. This is because, as described above, when viewed in the Z direction, all sides of the toggle support arm portion 132 are not surrounded by the crosshead 151.

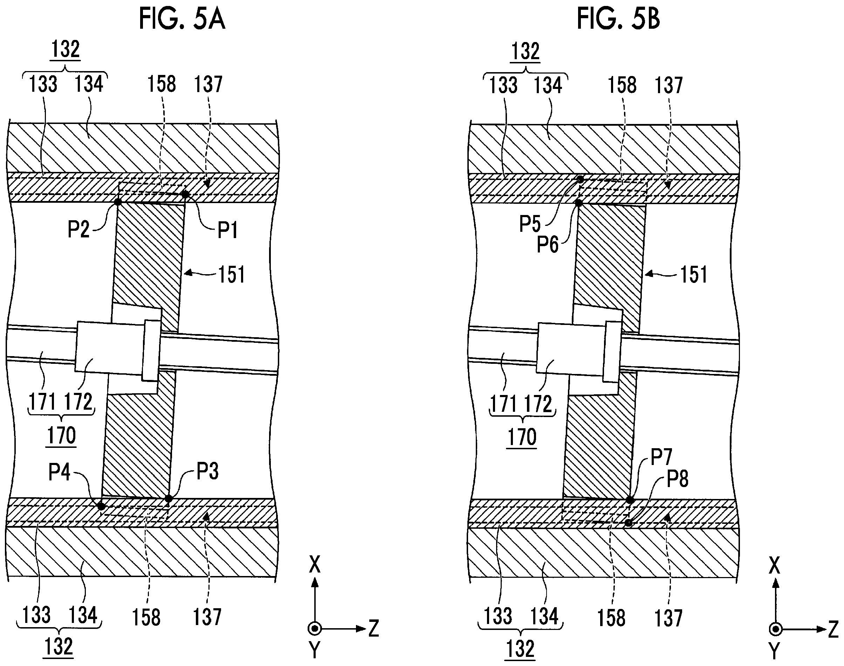

For example, the retaining portion 136 is constituted by the recessed portions 137 or the like. A role of the retaining portion 136 will be described with reference to Figs. 5A and 5B. Figs. 5A and 5B are views showing the yawing of the crosshead according to the embodiment. Fig. 5A is a view showing the yawing of the crosshead in a case where ΔGA is smaller than ΔGB. Fig. 5B is a view showing the yawing of the crosshead in a case where ΔGA is larger than ΔGB. ΔGA is a difference (G1 - G2) between a gap G1 (refer to Fig. 3) between inward surfaces of the pair of protrusion portions 158 in the X direction and a gap G2 (refer to Fig. 3) between outward surfaces of the pair of recessed portions 137 in the X direction. ΔGB is a difference (G3 - G4) between a gap G3 (refer to Fig. 3) between inward surfaces of the pair of recessed portions 137 in the X direction and a gap G4 (refer to Fig. 3) between outward surfaces of the pair of protrusion portions 158 in the X direction.

For example, the yawing of the crosshead 151 is generated in a case where different large friction forces are generated at both end portions of the crosshead 151 in the X direction. If the yawing of the crosshead 151 is generated, a gap between the pair of toggle support arm portions 132 provided with a gap in the X direction tends to be widened. The coming off of the crosshead 151 caused by the widening of the gap between the pair of toggle support arm portions 132 can be prevented by the retaining portion 136.

As shown in Fig. 3, each retaining portion 136 has the pair of recessed portions 137, into which the protrusion portions 158 of the crosshead 151 are inserted in the Z direction, with a gap in the Y direction. Accordingly, the toggle support arm portions 132 can come into contact with the crosshead 151 in line symmetry about the horizontal line XL. In addition, it is possible to prevent the crosshead 151 from rotating about the Z direction. Hereinafter, the rotation about the Z direction is also referred to as rolling.

In Fig. 5A, ΔGA is smaller than ΔGB. In this case, as shown in Fig. 5A, the crosshead 151 comes into contact with one toggle support arm portion 132 at a front point P1 and a rear point P2, the crosshead 151 comes into contact with the opposite toggle support arm portion 132 at a front point P3 and a rear point P4, and thus, the yawing of the crosshead 151 stops.

In addition, in Fig. 5A, ΔGA is smaller than ΔGB. However, ΔGA may be the same as ΔGB or may be larger than ΔGB. In Fig. 5B, ΔGA is larger than ΔGB. In this case, as shown in Fig. 5B, the crosshead 151 comes into contact with the one toggle support arm portion 132 at two rear points P5 and P6, the crosshead 151 comes into contact with the opposite toggle support arm portion 132 at two front points P7 and P8, and thus, the yawing of the crosshead 151 stops.

Moreover, in the present embodiment, the protrusion portions 158 are formed in the crosshead 151 and the recessed portions 137 are formed in the toggle support arm portion 132. However, dispositions of the protrusion portions and the recessed portions may be reversed. The recessed portions may be formed in the slider portion 157 of the crosshead 151 and the protrusion portions may be formed in the guide rail 133 of the toggle support arm portion 132. The retaining portion 136 of the guide rail 133 may have a pair of protrusion portions, into which recessed portions of the crosshead 151 are inserted in the Z direction, with a gap in the Y direction. Accordingly, each toggle support arm portion 132 can come into contact with the crosshead 151 in line symmetry about the horizontal line XL. In addition, it is possible to suppress the rolling of the crosshead 151.

In addition, the retaining portion 136 may include the recessed portions 137 into which the protrusion portions 158 of the crosshead 151 are inserted in the Z direction and the protrusion portions into which the recessed portions of the crosshead 151 are inserted in the Z direction, with a gap in the Y direction.

As shown in Fig. 4, the mold clamping unit 100 may further include a connection bar 173 which connects front end portions of the pair of toggle support arm portions 132 provided with a gap in the X direction to each other. The connection bar 173 may be separately formed from the toggle support arm portions 132 or may be integrally formed with the toggle support arm portions 132. Accordingly, it is possible to further suppress the deflection of each toggle support arm portion 132.

As shown in Fig. 4, the connection bar 173 may hold a bearing 174 which supports an extension shaft extending forward from the screw shaft 171. For example, a rolling bearing is used as the bearing 174. Compared to a case where a front end portion of the screw shaft 171 is not supported, the front end portion of the screw shaft 171 is supported, and thus, it is possible to suppress deflection of the screw shaft 171. Particularly, this is effective in a case where the screw shaft 171 penetrates the crosshead 151, that is, the screw nut 172 is attached to the crosshead 151.

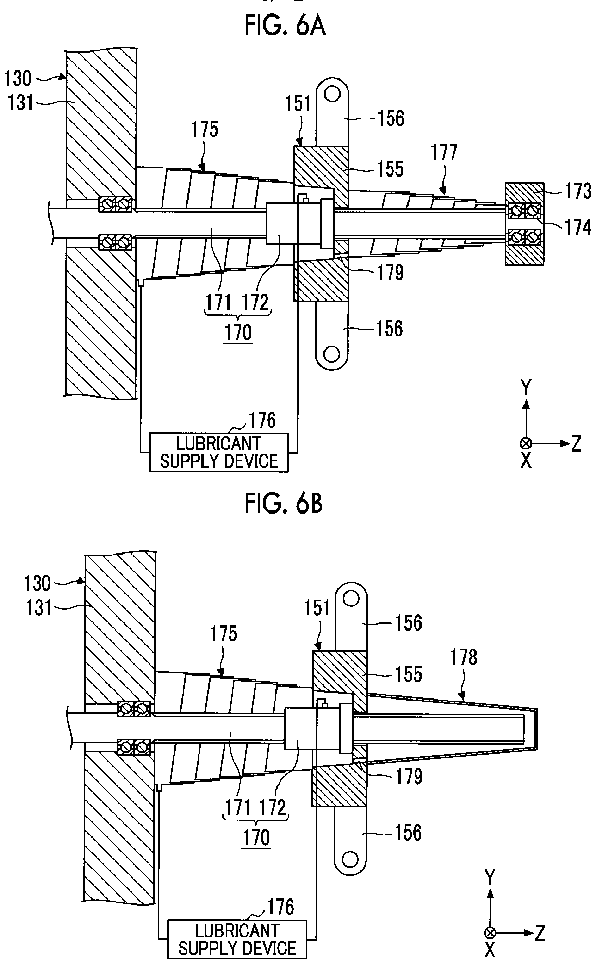

Figs. 6A and 6B are cross-sectional views showing a member used to lubricate the motion conversion mechanism according to the embodiment. Fig. 6A is a cross-sectional view showing a first example of the member used to lubricate the motion conversion mechanism. Fig. 6B is a cross-sectional view showing a second example of the member used to lubricate the motion conversion mechanism.

In the first example shown in Fig. 6A, the mold clamping unit 100 may have a rear cover 175 surrounding the screw shaft 171 and the screw nut 172 between the toggle support body portion 131 and the crosshead 151. The rear cover 175 is formed in a tubular shape, prevents a lubricant from scattering from the screw shaft 171 and the screw nut 172, and prevents foreign matters from entering from the outside. As the lubricant, oil or grease is used.

In order to easily collect the lubricant from the rear cover 175, the rear cover 175 may be formed to be tapered forward and may be formed in a tapered cone shape, for example. In the rear cover 175, the lubricant flows to the toggle support body portion 131 side due to the gravity. Unlike the crosshead 151, the toggle support body portion 131 does not move forward or rearward when the mold is opened or closed, and thus, the lubricant is easily collected in the toggle support body portion 131.

A rear end portion of the rear cover 175 is attached to the toggle support body portion 131, and a front end portion of the rear cover 175 is attached to the crosshead 151. The rear cover 175 is formed in a spiral shape, and thus, is expanded or shrunk according to the forward or rearward movement of the crosshead 151. In addition, the rear cover 175 may be formed in a bellows shape or the like. In addition, the rear cover 175 may be attached to the toggle support body portion 131 or the crosshead 151 so as to rotate together with the screw shaft 171.

The mold clamping unit 100 may further include a lubricant supply device 176 which supplies the lubricant to the screw shaft 171 and the screw nut 172. For example, the lubricant supply device 176 supplies the lubricant to the screw nut 172 and also supplies the lubricant to the screw shaft 171 via the screw nut 172. The screw shaft 171 and the screw nut 172 are cooled by the lubricant inside the rear cover 175.

For example, the lubricant supply device 176 may have a heat exchanger which cools the lubricant collected from the inside of the rear cover 175, a filter which removes impurities from the collected lubricant, and a circulation pump which returns the lubricant, which is cooled by the heat exchanger and has passed through the filter, to the screw nut 172. It is possible to reduce a used amount of the lubricant by circulating the lubricant.

As shown in Fig. 6A, the mold clamping unit 100 may have a front cover 177 which surrounds the screw shaft 171 between the crosshead 151 and the connection bar 173. The front cover 177 is formed in a tubular shape, prevents the lubricant from scattering from the screw shaft 171, and prevents foreign matters from entering from the outside.

In order to easily collect the lubricant from the front cover 177, the front cover 177 may be formed to be tapered forward and may be formed in a tapered cone shape, for example. In the front cover 177, the lubricant flows to the crosshead 151 side due to the gravity. In the crosshead 151, a flow path 179 through which the lubricant is fed from the front cover 177 to the rear cover 175 may be formed. The flow path 179 is inclined downward from the front side toward the rear side, and thus, the lubricant flows from the front cover 177 to the rear cover 175 by the gravity.

A rear end portion of the front cover 177 is attached to the crosshead 151, and a front end portion of the front cover 177 is attached to the connection bar 173. The front cover 177 is formed in a spiral shape, and thus, is expanded or shrunk according to the forward or rearward movement of the crosshead 151. In addition, the front cover 177 may be formed in a bellows shape or the like. In addition, the front cover 177 may be removed from the connection bar 173, and in this case, the front cover 177 may not be expanded or shrunk. In addition, the front cover 177 may be attached to the crosshead 151 or the connection bar 173 so as to rotate together with the screw shaft 171.

In the second example shown in Fig. 6B, the connection bar 173 shown in Fig. 6A is not provided, and the front end portion of the screw shaft 171 is a free end. In addition, in Fig. 6B, instead of the expandable/shrinkable front cover 177, a front cover 178 which is not expandable/shrinkable is provided.

The front cover 178 surrounds a periphery of the screw shaft 171 in front of the crosshead 151. The front cover 178 is formed in a tubular shape, prevents the lubricant from scattering from the screw shaft 171, and prevents foreign matters from entering from the outside.

In order to easily collect the lubricant from the front cover 178, the front cover 178 may be formed to be tapered forward and may be formed in a tapered cone shape, for example. In the front cover 178, the lubricant flows to the crosshead 151 side due to the gravity.

Moreover, the mold clamping unit 100 of the present embodiment has one set of the mold clamping motor 160 and the motion conversion mechanism 170. However, the mold clamping unit 100 may have a plurality of sets of mold clamping motor 160 and motion conversion mechanism 170. In this case, when the mold is clamped, a load is distributed into the plurality of screw shafts 171, and thus, it is possible to further suppress damages of the screw shaft 171. For example, a pair of motion conversion mechanisms 170 may be provided to be symmetrical right and left with respect to the center 159 of the crosshead 151. In addition, an extension shaft extending forward from the left screw shaft 171 may be supported by the left toggle support arm portion 132 instead of the connection bar 173. Similarly, an extension shaft extending forward from the right screw shaft 171 may be supported by the right toggle support arm portion 132 instead of the connection bar 173.

### (Modification and Improvement)

Hereinbefore, the embodiment or the like of the injection molding machine is described. However, the present invention is not limited to the above-mentioned embodiment or the like, and various modifications and improvements are possible within a range of the concept of the present invention described in claims.

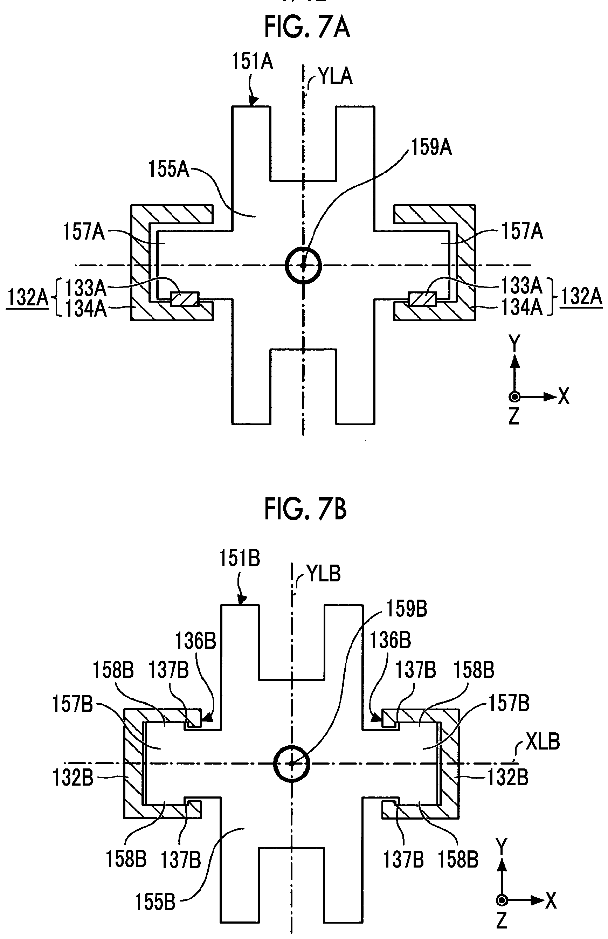

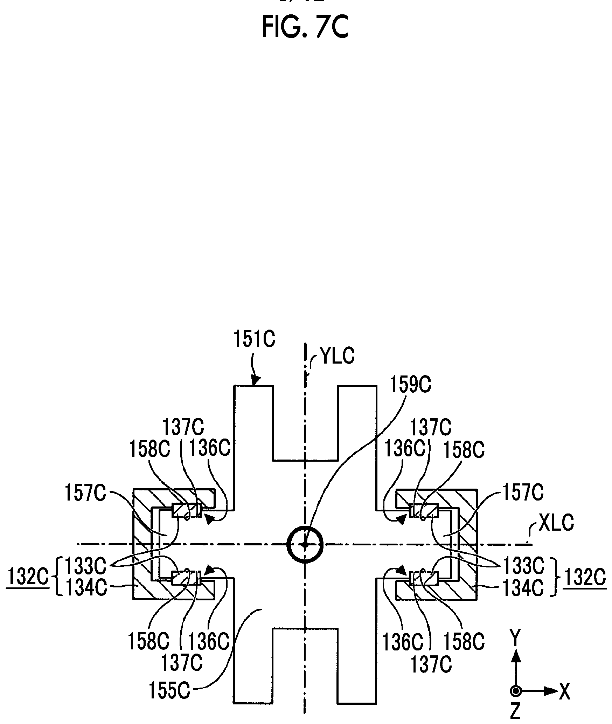

Figs. 7A to 7C are cross-sectional views showing a modification example of toggle support arm portion shown in Fig. 3. Fig. 7A is a cross-sectional view showing a first modification example of the toggle support arm portion shown in Fig. 3. Fig. 7B is a cross-sectional view showing a second modification example of the toggle support arm portion shown in Fig. 3. Fig. 7C is a cross-sectional view showing a third modification example of the toggle support arm portion shown in Fig. 3.

In the first modification example shown in Fig. 7A, each toggle support arm portion 132A includes a guide rail 133A which comes into contact with a crosshead 151A and guides the crosshead 151A, and a guide holder 134A which holds the guide rail 133A. A guide direction of the guide rail 133A is the Z direction.

Each of the guide rail 133A and the guide holder 134A extend straightly in the Z direction. A cross-sectional shape of the guide holder 134A perpendicular to the Z direction is a horizontal U shape. The guide holder 134A includes an upper wall portion, a lower wall portion, and a side wall portion which connects the upper wall portion and the lower wall portion to each other. The guide rail 133A is fixed to the lower wall portion of the guide holder 134A. In addition, in Fig. 7A, the guide holder 134A has the upper wall portion, the lower wall portion, and the side wall portion which connects the upper wall portion and the lower wall portion to each other. However, the guide holder 134A may have at least the lower wall portion. The guide holder 134A may not have the upper wall portion. In addition, the guide holder 134A may not have the side wall portion.

When viewed in the Z direction, the toggle support arm portion 132A comes into contact with the crosshead 151A from the outside. When viewed in the Z direction, the toggle support arm portion 132A comes into contact with an outer peripheral portion of the crosshead 151A, and thus, supports the crosshead 151A and guides the crosshead 151A. When viewed in the Z direction, the toggle support arm portion 132A is disposed outside the crosshead 151A, and all sides of the guide rail 133A of the toggle support arm portion 132A are not surrounded by the crosshead 151A. Accordingly, similarly to the embodiment, the guide rail 133A can be reinforced by the guide holder 134A, deformation of the guide rail 133A can be suppressed, and thus, pitching of the crosshead 151A guided by the guide rails 133A can be suppressed. As a result, it is possible to decrease deflection of the screw shaft 171 connected to the crosshead 151A, and damages of the screw shaft 171 can be suppressed.

When viewed in the Z direction, the toggle support arm portions 132A come into contact with the crosshead 151A in line symmetry about a vertical line YLA passing through a center 159A of the crosshead 151A and extending in the Y direction. Accordingly, the friction force between the crosshead 151A and the toggle support arm portion 132A is symmetrically generated about the vertical line YLA, and thus, it is possible to suppress yawing of the crosshead 151A generated by the friction force.

Unlike the embodiment and the first modification example, in the second modification example shown in Fig. 7B, a toggle support arm portion 132B is obtained by integrating the guide rail and the guide holder with each other. A guide direction of the toggle support arm portion 132B is the Z direction.

The toggle support arm portion 132B extend straightly in the Z direction. A cross-sectional shape of the toggle support arm portion 132B perpendicular to the Z direction is a horizontal U shape. The toggle support arm portion 132B includes an upper wall portion, a lower wall portion, and a side wall portion which connects the upper wall portion and the lower wall portion to each other. Recessed portions 137B are formed on surfaces of the upper wall portion and the lower wall portion facing each other. In addition, in Fig. 7B, the toggle support arm portion 132B has the upper wall portion, the lower wall portion, and the side wall portion which connects the upper wall portion and the lower wall portion to each other. However, toggle support arm portion 132B may not have the side wall portion. The toggle support arm portion 132B may be divided into the upper wall portion and the lower wall portion. Moreover, the toggle support arm portion 132B may have only the low wall portion and may not have only the upper wall portion.

Each slider portion 157B of the crosshead 151B has protrusion portions 158B on both end surfaces in the Y direction. A cross-sectional shape of the slider portion 157B perpendicular to the Z direction is a horizontal T shape. The protrusion portions 158B of each slider portion 157B move in the Z direction inside the recessed portions 137B of each toggle support arm portion 132B. The recessed portions 137B extend straightly in the Z direction.

When viewed in the Z direction, each toggle support arm portion 132B comes into contact with the crosshead 151B from the outside. When viewed in the Z direction, the toggle support arm portion 132B comes into contact with an outer peripheral portion of the crosshead 151B, and thus, supports the crosshead 151B and guides the crosshead 151B. When viewed in the Z direction, the toggle support arm portion 132B is disposed outside the crosshead 151B, and all sides of the guide rail of the toggle support arm portion 132B are not surrounded by the crosshead 151B. Accordingly, similarly to the embodiment, the guide rail of the toggle support arm portion 132B can be reinforced from the outside, deformation of the guide rail can be suppressed, and thus, pitching of the crosshead 151B guided by the guide rails can be suppressed. As a result, it is possible to decrease deflection of the screw shaft 171 connected to the crosshead 151B, and damages of the screw shaft 171 can be suppressed.

When viewed in the Z direction, the toggle support arm portions 132B come into contact with the crosshead 151B in line symmetry about a vertical line YLB passing through a center 159B of the crosshead 151B and extending in the Y direction. Accordingly, the friction force between the crosshead 151B and the toggle support arm portion 132B is symmetrically generated about the vertical line YLB, and thus, it is possible to suppress yawing of the crosshead 151B generated by the friction force.

In addition, when viewed in the Z direction, the toggle support arm portions 132B come into contact with the crosshead 151B in line symmetry about a horizontal line XLB passing through the center 159B of the crosshead 151B and extending in the X direction. Accordingly, the friction force between the crosshead 151B and the toggle support arm portion 132B is symmetrically generated about the horizontal line XLB, and thus, it is possible to suppress pitching of the crosshead 151B generated by the friction force.

Each toggle support arm portion 132B includes a retaining portion 136B which prevents the crosshead 151B from coming off from the toggle support arm portion 132B. The retaining portion 136B has a pair of recessed portions 137B, into which the protrusion portions 158B of the crosshead 151B are inserted in the Z direction, with a gap in the Y direction.

In the third modification example shown in Fig. 7C, each toggle support arm portion 132C includes guide rails 133C which come into contact with a crosshead 151C and guides the crosshead 151C, and a guide holder 134C which holds the guide rails 133C. A guide direction of each guide rail 133C is the Z direction.

The guide rail 133C and the guide holder 134C extends straightly in the Z direction. A cross-sectional shape of the guide holder 134C perpendicular to the Z direction is a horizontal U shape. The guide holder 134C includes an upper wall portion, a lower wall portion, and a side wall portion which connects the upper wall portion and the lower wall portion to each other. The guide rails 133C are fixed to the upper and lower wall portions of the guide holder 134C. The guide rails 133C constitute protrusion portions 137C which protrude inward from the upper and lower both wall portions. In addition, in Fig. 7C, the guide holder 134C has the upper wall portion, the lower wall portion, and the side wall portion which connects the upper wall portion and the lower wall portion to each other. However, the guide holder 134C may not have the side wall portion. That is, the guide holder 134C may be divided into the upper wall portion and the lower wall portion. The upper guide rail 133C is fixed to a lower surface of the upper wall portion and a lower guide rail 133C is fixed to an upper surface of the lower wall portion.

The slider portion 157C of the crosshead 151C has recessed portions 158C on both end surfaces in the Y direction. A cross-sectional shape of the slider portion 157C perpendicular to the Z direction is an H shape. The recessed portions 158C of the slider portion 157C move in the Z direction along the protrusion portions 137C of the toggle support arm portion 132C. Each protrusion portion 137C extends straightly in the Z direction.

The toggle support arm portion 132C comes into contact with the crosshead 151C from the outside when viewed in the Z direction. When viewed in the Z direction, the toggle support arm portion 132C comes into contact with an outer peripheral portion of the crosshead 151C, and thus, supports and guides the crosshead 151C. When viewed in the Z direction, the toggle support arm portion 132C is disposed outside the crosshead 151C, and all sides of the guide rail 133C of the toggle support arm portion 132C are not surrounded by the crosshead 151C. Accordingly, similarly to the first embodiment, the guide rail 133C can be reinforced by the guide holder 134C, deformation of the guide rail 133C can be suppressed, and thus, the pitching of the crosshead 151C guided by the guide rails 133C can be suppressed. As a result, it is possible to decrease deflection of the screw shaft 171 connected to the crosshead 151C, and damages of the screw shaft 171 can be suppressed.

When viewed in the Z direction, the toggle support arm portions 132C come into contact with the crosshead 151C in line symmetry about a vertical line YLC passing through a center 159C of the crosshead 151C and extending in the Y direction. Accordingly, a friction force between the crosshead 151C and the toggle support arm portion 132C is symmetrically generated about the vertical line YLC, and thus, it is possible to suppress yawing of the crosshead 151C generated by the friction force.

When viewed in the Z direction, the toggle support arm portion 132C comes into contact with the crosshead 151C in line symmetry about a horizontal line XLC passing through the center 159C of the crosshead 151C and extending in the X direction. Accordingly, the friction force between the crosshead 151C and the toggle support arm portion 132C is symmetrically generated about the horizontal line XLC, and thus, it is possible to suppress pitching of the crosshead 151C generated by the friction force.

Each guide rail 133C of the toggle support arm portion 132C includes a retaining portion 136C which prevents the crosshead 151C from coming off from the toggle support arm portion 132C. The retaining portion 136C has a pair of protrusion portions 137C, into which the protrusion portions 158C of the crosshead 151C are inserted in the Z direction, with a gap in the Y direction.

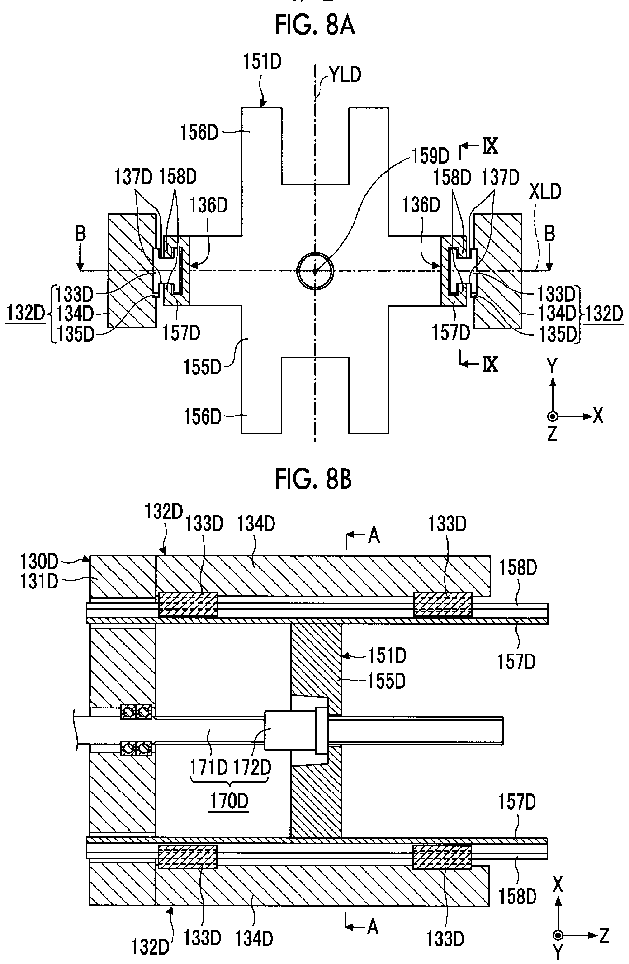

Figs. 8A and 8B are views showing a crosshead and a toggle support according to a fourth modification example. Fig. 8A is a cross-sectional view of the crosshead and the toggle support taken along line A-A of Fig. 8B. Fig. 8B is a cross-sectional view of the crosshead and the toggle support taken along line B-B of Fig. 8A.

A toggle support 130D includes a toggle support body portion 131D to which the second link 153 (refer to Figs. 1 and 2) is oscillatingly attached and toggle support arm portions 132D which guide a crosshead 151D. In addition to the second link 153 shown in Figs. 1 and 2, the mold clamping motor 160 or the tie bar 140 is attached to the toggle support body portion 131D.

As shown in Fig. 8B, the toggle support arm portion 132D protrudes forward from the toggle support body portion 131D. A method for guiding the crosshead 151D by the toggle support arm portions 132D may be any one of sliding guide and rolling guide . A pair of toggle support arm portions 132D may be provided with a gap in the X direction across the crosshead 151D.

As shown in Fig. 8A, each toggle support arm portion 132D includes a guide 133D which comes into contact with the crosshead 151D and guides the crosshead 151D and a guide holder 134D which holds the guide 133D. A guide direction of the guide 133D is the Z direction.

As shown in Fig. 8B, the guides 133D are provided with a gap in the Z direction, and are provided on both sides in the Z direction across the crosshead body portion 155D. As shown in Fig. 8A, each guide 133D includes recessed portions 137D on both end surfaces in the Y direction. Each recessed portion 137D extends straightly in the Z direction. As shown in Fig. 8A, for example, a cross-sectional view of the guide 133D perpendicular to the Z direction is an H shape.

Unlike the guide 133D, the guide holder 134D does not come into contact with the crosshead 151D. As shown in Fig. 8B, the guide holder 134D extends straightly in the Z direction. As shown in Fig. 8A, for example, a cross-sectional view of the guide holder 134D perpendicular to the Z direction is a plate shape.

For example, the guide holder 134D has a groove, into which the guide 133D is fitted, on a surface perpendicular to the X direction. The entire end surface of the guide 133D in the X direction may be fixed to a bottom wall surface of the groove. In addition, a wedge 135D may be driven into a gap between a side wall surface of the groove and the guide r133D.

The crosshead 151D has a crosshead body portion 155D to which a motion conversion mechanisms 170D is connected, link attachment portions 156D which extend in the Y direction from the crosshead body portion 155D and to which the third links 154 are oscillatingly attached, and shaft portions 157D which extend in the X direction from the crosshead body portion 155D, are guided by the toggle support arm portions 132D, and are guided portions.

As shown in Fig. 8B or the like, the motion conversion mechanisms 170D is connected to the crosshead body portion 155D. For example, a screw nut 172D of the motion conversion mechanism 170D is fixed to the crosshead body portion 155D. For example, the crosshead body portion 155D is formed in a plate shape perpendicular to the Z direction and is formed in a rectangular shape when viewed in the Z direction. When viewed in the Z direction, the motion conversion mechanisms 170D is attached to a center portion of the crosshead body portion 155D.

In addition, at the time of the mold clamping or the like, when a rotational moment acts on the crosshead body portion 155D, the motion conversion mechanism 170D may be oscillatingly connected to the crosshead body portion 155D by a pin or the like such that the rotational moment is not transmitted to the motion conversion mechanism 170D.

As shown in Fig. 8A, each link attachment portion 156D protrudes in the Y direction from the crosshead body portion 155D. The third link 154 (refer to Figs. 1 and 2) is oscillatingly attached to a distal end portion of the link attachment portion 156D by a pin or the like. A pair of link attachment portions 156D may be provided with a gap in the Y direction across the crosshead body portion 155D.

The link attachment portion 156D has a plurality of link attachment plates perpendicular to the X direction with a gap in the X direction. Each link attachment plate extends in the Y direction from both end surfaces of the crosshead body portion 155D in the Y direction. Each link attachment plate extends in the Y direction from both end surfaces of the crosshead body portion 155D in the Y direction, may be inclined in one direction (for example, front side) in the Z direction from an intermediate portion, or may protrude in one direction in the Z direction from the crosshead body portion 155D. A through-hole penetrating the link attachment plate in the X direction is formed in a distal end portion of each link attachment plate. A pin is inserted into the through-hole, and thus, the third link 154 is oscillatingly attached to the link attachment portion 156D via the pin.

As shown in Fig. 8A, each shaft portion 157D is guided by the toggle support arm portion 132D. A pair of shaft portions 157D may be provided with a gap in the X direction across the crosshead body portion 155D. The shaft portions 157D are provided on both sides in the X direction across the crosshead body portion 155D and are fixed to distal end portions of protrusions extending in the X direction form a center portion in the Y direction of both end surfaces of the crosshead body portion 155D in the X direction. Each shaft portion 157D is separately formed from the crosshead body portion 155D and is connected to the crosshead body portion 155D. However, the shaft portion 157D may be integrally formed with the crosshead body portion 155D.

The shaft portion 157D has protrusion portions 158D which sandwich the guide 133D from both sides in the Y direction. The protrusion portions 158D of the shaft portion 157D move in the Z direction inside the recessed portions 137D of the guide 133D. For example, as shown in Fig. 8A, a cross-sectional shape of the shaft portion 157D perpendicular to the Z direction is a C shape.

As shown in Fig. 8A, each toggle support arm portion 132D comes into contact with the crosshead 151D from the outside when viewed in the Z direction. When viewed in the Z direction, the toggle support arm portion 132D comes into contact with an outer peripheral portion of the crosshead 151D, and thus, supports and guides the crosshead 151D. When viewed in the Z direction, the toggle support arm portion 132D is disposed outside the crosshead 151D, and all sides of the guide 133D of the toggle support arm portion 132D are not surrounded by the crosshead 151D. Accordingly, similarly to the first embodiment, the guide 133D can be reinforced by the guide holder 134D, deformation of the guide 133D can be suppressed, and thus, the pitching of the crosshead 151D guided by the guide 133D can be suppressed. As a result, it is possible to decrease deflection of a screw shaft 171D connected to the crosshead 151D, and damages of the screw shaft 171D can be suppressed.

When viewed in the Z direction, the toggle support arm portions 132D come into contact with the crosshead 151D in line symmetry about a vertical line YLD passing through a center 159D of the crosshead 151D and extending in the Y direction. Accordingly, a friction force between the crosshead 151D and the toggle support arm portion 132D is symmetrically generated about the vertical line YLD, and thus, it is possible to suppress yawing of the crosshead 151D generated by the friction force.

When viewed in the Z direction, the toggle support arm portion 132D comes into contact with the crosshead 151D in line symmetry about a horizontal line XLD passing through the center 159D of the crosshead 151D and extending in the X direction. Accordingly, a friction force between the crosshead 151D and the toggle support arm portion 132D is symmetrically generated about the horizontal line XLD, and thus, it is possible to suppress pitching of the crosshead 151D generated by the friction force.

The guide 133D of the toggle support arm portion 132D includes a retaining portion 136D which prevents the crosshead 151D from coming off from the toggle support arm portion 132D. The retaining portion 136D has a pair of recessed portions 137D, into which the protrusion portions 158D of the crosshead 151D are inserted in the Z direction, with a gap in the Y direction.

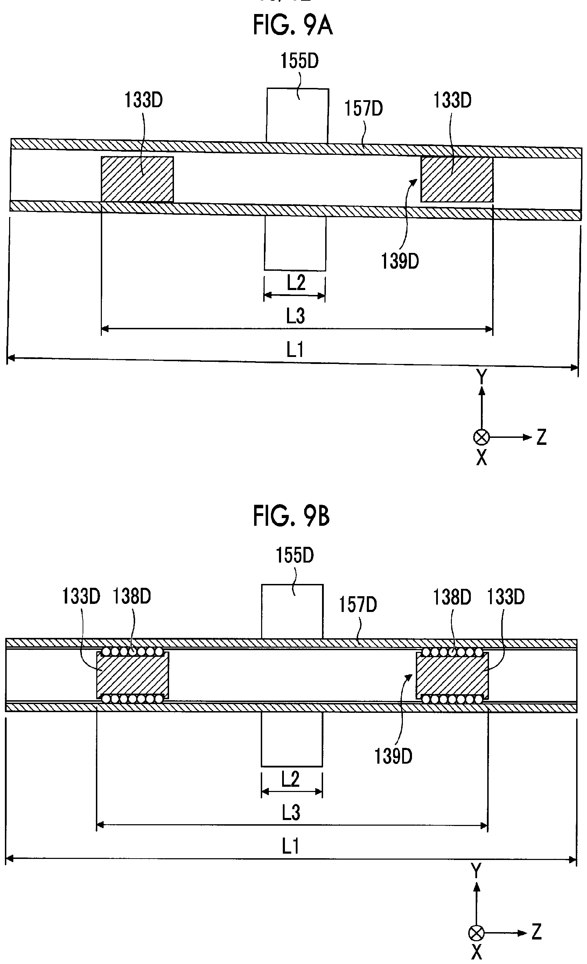

Figs. 9A and 9B are cross-sectional views taken along line IX-IX of Fig. 8A. Fig. 9A is a cross-sectional view in a case where the shaft portion is slide-guided, and is a cross-sectional view in a state where an inclination of the crosshead is suppressed by the toggle support arm portion. Fig. 9B is a cross-sectional view in a case where the shaft portion is roll-guided. In Figs. 9A and 9B, the inclinations of the crossheads are exaggeratedly shown.

In Fig. 9A, the guides 133D slide-guides the shaft portion 157D. The shaft portion 157D extends in both direction in the Z direction from the crosshead body portion 155D and is guided by the plurality of guides 133D provided with a gap in the Z direction. One guide 133D is provided in front of the crosshead body portion 155D, and the other guide 133D is provided behind the crosshead body portion 155D.

A guide unit 139D is constituted by the plurality of guides 133D. In addition, in Figs. 9A and 9B, the guide unit 139D is constituted by two guides 133D. However, the guide unit 139D may be constituted by three or more guides 133D.

A dimension L1 of the shaft portion 157D in the Z direction is longer than a dimension L2 of the crosshead body portion 155D in the Z direction. In addition, a dimension L3 of the guide unit 139D in the Z direction is longer than a dimension L2 of the crosshead body portion 155D in the Z direction.

Here, the dimension L3 of the guide unit 139D in the Z direction is a dimension between a front end of the guide 133D disposed on the frontmost side and a rear end of the guide 133D disposed on the rearmost side. The same is applied to a case where the number of guides 133D is three or more.

As is apparent from Fig. 9A, the inclination of the shaft portion 157D is determined by a clearance between the shaft portion 157D and the guide 133D, the dimension L3 of the guide unit 139D in the Z direction, or the like.

In a case where the clearance that is one of factors which determine the inclination of the shaft portion 157D is the same, if the dimension L3 of the guide unit 139D in the Z direction that is another factor which determines the inclination of the shaft portion 157D is longer than the dimension L2 of the crosshead body portion 155D in the Z direction, compared to a case where the dimension L3 is the same as the dimension L2, it is possible to suppress the inclination of the shaft portion 157D, and it is possible to suppress the inclination of the crosshead body portion 155D. Therefore, deflection of the motion conversion mechanism 170D attached to the crosshead body portion 155D can be suppressed, and damages caused by an uneven load of the motion conversion mechanism 170D can be suppressed.

The dimension L3 of the guide unit 139D in the Z direction is set so that the inclination of the shaft portion 157D is within a predetermined allowable range, and thus a deflection amount of the screw shaft 171D of the motion conversion mechanism 170D is within the predetermined allowable range.

For example, the dimension L3 of the guide unit 139D in the Z direction is set so that the inclination of the screw nut 28 with respect to the rear end portion of the screw shaft 27 is within a predetermined allowable range. That is, the dimension L3 of the guide unit 139D in the Z direction is set so that an inclination between one axial end portion of the screw shaft 27 and the other axial end portion of the screw shaft 27 is within a predetermined allowable range.

Since the shaft portion 157D penetrates the toggle support 130D in the Z direction, a movement of the shaft portion 157D in the Z direction is not hindered by the toggle support 130D. Therefore, a movable range of the crosshead 151D in the Z direction is determined by a movable range of the crosshead body portion 155D in the Z direction. Therefore, the dimension L1 of the shaft portion 157D in the Z direction being longer than the dimension L2 of the crosshead body portion 155D in the Z direction can prevent the dimension of the mold clamping unit in the Z direction from expanding, and can prevent the mold clamping unit from expanding in the Z direction.

In Fig. 9B, the guides 133D roll-guide the shaft portion 157D. Each guide 133D has rolling elements 138D which come into contact with the shaft portion 157D. The rolling elements 138D roll inside a groove of the shaft portion 157D extending in the Z direction. In addition, the groove may not be formed in the shaft portion 157D.

The guide 133D may have a circulation path, through which the plurality of rolling elements 138D circulate, inside the guide 133D. In Fig. 9B, the rolling elements 138D are held on the guide 133D side, but may be held on the shaft portion 157D side. In addition, in Fig. 9B, as the rolling elements 138D, balls are used. However, rollers may be used.

As is apparent from Fig. 9B, the inclination of the shaft portion 157D is determined by a clearance between the shaft portion 157D and the guide 133D, the dimension L3 of the guide unit 139D in the Z direction, or the like.

Similarly to Fig. 9A, in the Fig. 9B, the dimension L3 of the guide unit 139D in the Z direction that is one of factors which determine the inclination of the shaft portion 157D is longer than the dimension L2 of the crosshead body portion 155D in the Z direction. In addition, in Fig. 9B, the guide method of the shaft portion is the roll guide, and thus, as shown in Fig. 9B, the clearance between the shaft portion 157D and the guide 133D can decrease. The rolling elements 138D of the guide 133D roll, and thus, the shaft portion 157D can be inserted into the guide 133D.

In Fig. 9B, the clearance which is one of factors which determine the inclination of the shaft portion 157D can decrease, and thus, it is possible to further suppress the inclination of the shaft portion 157D and it is possible to further suppress the inclination of the crosshead body portion 155D. Therefore, the deflection of the motion conversion mechanism 170D attached to the crosshead body portion 155D can be further suppressed, and the damages caused by an uneven load of the motion conversion mechanism 170D can be further suppressed.

In addition, in the present modification example, as shown in Fig. 8A, the cross-sectional shape of the guide 133D perpendicular to the Z direction is the H shape, and the cross-sectional shape of the shaft portion 157D perpendicular to the Z direction is the C shape. However, a combination of the shapes is not particularly limited. The combination of the shapes may be the combination (refer to Fig. 7A) of the shapes of the first modification example, the combination (refer to Fig. 7B) of the shapes of the second modification example, a combination (refer to Fig. 7C) of the shapes of the third modification example, or the like.

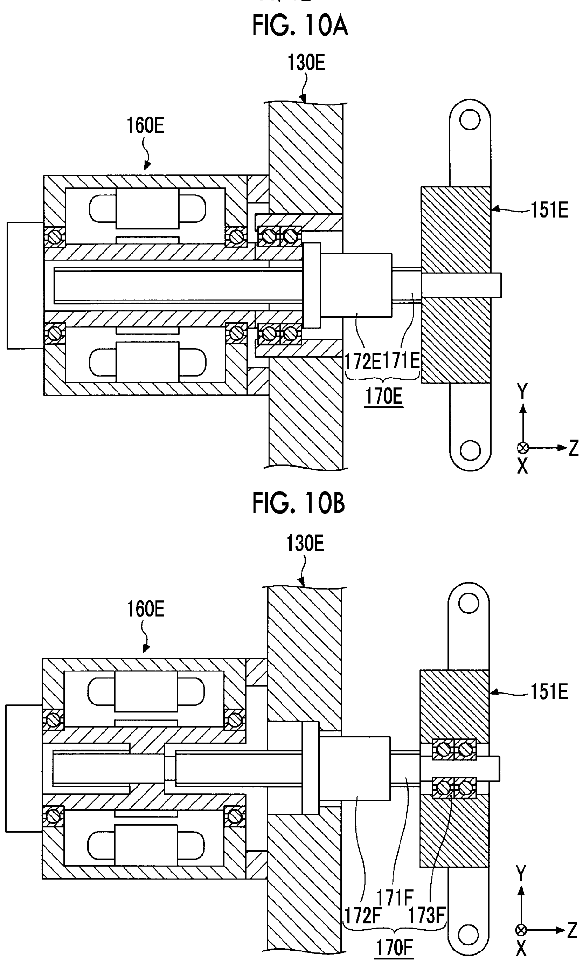

Figs. 10A and 10B are views showing a modification example of the motion conversion mechanism shown in Fig. 1. Fig. 10A is a view showing a first modification example of the motion conversion mechanism. Fig. 10B is a view showing a second modification example of the motion conversion mechanism.

In the first modification example shown in Fig. 10A, a screw nut 172E is coaxially fixed to a rotor of a mold clamping motor 160E. The screw nut 172E is disposed on a center line of the rotor of the mold clamping motor 160E. However, the screw nut 172E may be disposed so as to be shifted from the center line, and a belt, a pulley, or the like may transmit a rotary motion of the mold clamping motor 160E to the screw nut 172E. Meanwhile, a front extension shaft of the screw shaft 171E is fixed to a crosshead 151E. If the mold clamping motor 160E is operated, the screw nut 172E rotates, the screw shaft 171E moves forward or rearward, and thus, the crosshead 151E moves forward or rearward. A motion conversion mechanism 170E includes the screw shaft 171E or the screw nut 172E. As shown in Fig. 10A, the screw nut 172E may be rotatably supported by a bearing held by a toggle support 130E.

In the second modification example shown in Fig. 10B, a screw nut 172F is fixed to a toggle support 130F. Meanwhile, a rear extension shaft of a screw shaft 171F is coaxially spline-coupled to a rotor of a mold clamping motor 160F, and a front extension shaft of the screw shaft 171F is rotatably supported by a bearing 173F held by a crosshead 151F. The screw shaft 171F is disposed on a center line of the rotor of the mold clamping motor 160F, but may be disposed so as to be shifted from the center line. In this case, a rotary motion of the mold clamping motor 160F may be transmitted to a rotation member via a belt, a pulley, or the like, and the rear extension shaft of the screw shaft 171F is spline-coupled to the rotation member. If the mold clamping motor 160F is operated, the screw shaft 171F moves forward or rearward while being rotated, and thus, the crosshead 151F moves forward or rearward together with the bearing 173F. A motion conversion mechanism 170F includes the bearing 173F in addition to the screw shaft 171F or the screw nut 172F.

The toggle mechanism 150 of the embodiment is used to amplify a thrust by the mold clamping motor 160 and transmit the thrust to the movable platen 120. However, the toggle mechanism 150 may be used to amplify a thrust by the ejector motor 210 and transmit the thrust to the ejector rod 230. In this case, the toggle mechanism 150 is provided between the movable platen 120 and a slide base which can move forward and rearward behind the movable platen 120. The movable platen 120 corresponds to toggle support. The first link 152 is oscillatingly attached to the slide base by a pin or the like, and the second link 153 is oscillatingly attached to the movable platen 120 by a pin or the like. The first link 152 and the second link 153 are bendably/stretchably connected to each other by a pin or the like. For example, the first link 152 and the second link 153 are extended when the forward movement starts and are bent when the forward movement is completed. The second link 153 is attached to the crosshead 151 via the third link 154. A rotary motion of the ejector motor 210 is converted into a linear motion of the crosshead 151 by the motion conversion mechanism 220. If the crosshead 151 is moved forward or rearward by operating the ejector motor 210, the first link 152 and the second link 153 is bent and stretched, and thus, the slide base moves forward or rearward with respect to the movable platen 120. As a result, the ejector rod 230 moves forward or rearward together with the slide base.

Figs. 11A and 11B are cross-sectional views showing a state where inclinations of the crosshead shown in Fig. 3 and a crosshead of a modification example thereof are suppressed by a toggle support arm portion. Fig. 11A is a cross-sectional view showing a state where the inclination of the crosshead shown in Fig. 3 is suppressed by the toggle support arm portion and a cross-sectional view taken along line XI-XI of Fig. 3. Fig. 11B is a cross-sectional view showing a state where the inclination of the crosshead of the modification example is suppressed by the toggle support arm portion. In Figs. 11A and 11B, the inclinations of the crossheads are exaggeratedly shown.

The dimension L1 in the Z direction of the slider portion 157 serving as a guided portion shown in Fig. 11A is the same as the dimension L2 of the crosshead body portion 155 in the Z direction. Meanwhile, the dimension L1 in the Z direction of the slider portion 157 serving as the guided portion shown in Fig. 11B is longer than the dimension L2 of the crosshead body portion 155 in the Z direction.

The inclination of the slider portion 157 is determined by a clearance between the slider portion 157 and the guide rail 133, the dimension L1 of the slider portion 157 in the Z direction, or the like. Moreover, in Figs. 11A and 11B, the clearances between the slider portion 157 and the guide rail 133 are the same as each other.

As is clear by a comparison between Fig. 11A and Fig. 11B, when the clearance which is one of the factors which determine the inclination of the slider portion 157 is the same, if L1 which is another one of the factors which determine the inclination of the slider portion 157 is longer than L2, compared to a case where L1 and L2 are the same as each other, it is possible to suppress the inclination of the slider portion 157 and it is possible to suppress the inclination of the crosshead body portion 155. Accordingly, it is possible to suppress the deflection of the motion conversion mechanism 170 attached to the crosshead body portion 155, and the damages caused by the uneven load of the motion conversion mechanism 170 can be suppressed.

Moreover, the slider portion 157 shown in Fig. 11B protrudes to both sides (positive direction side and negative direction side) in the Z direction from the crosshead body portion 155. However, the slider portion 157 may protrude to only one side (positive direction side or negative direction side) in the Z direction from the crosshead body portion 155. In any case, compared to the case where L1 and L2 are the same as each other, since L1 is longer than L2, it is possible to suppress the inclination of the slider portion 157 and it is possible to suppress the inclination of the crosshead body portion 155. Therefore, it is possible to suppress the deflection of the motion conversion mechanism 170 attached to the crosshead body portion 155, and the damages caused by the uneven load of the motion conversion mechanism 170 can be suppressed.

Moreover, the guide method of the slider portion 157 shown in Fig. 11B is the sliding guide. However, similarly to the shaft portion 157D shown in Fig. 9B, the guide method of the slider portion 157 may be the rolling guide. It is possible to decrease the clearance which is one of the factors which determine the inclination of the slider portion 157, it is possible to further suppress the inclination of the slider portion 157, and it is possible to further suppress the inclination of the crosshead body portion 155. Therefore, it is possible to further suppress the deflection of the motion conversion mechanism 170 attached to the crosshead body portion 155, and the damages caused by the uneven load of the motion conversion mechanism 170 can be further suppressed.

The technology shown in Figs. 11A and 11B can be also applied to the crossheads 151A, 151B, and 151C shown in Figs. 7A to 7C. Specifically, the dimension of the slider portion 157A in the Z direction shown in Fig. 7A may be longer than the dimension of the crosshead body portion 155A in the Z direction. The dimension of the slider portion 157B in the Z direction shown in Fig. 7B may be longer than the dimension of the crosshead body portion 155B in the Z direction. The dimension of the slider portion 157C in the Z direction shown in Fig. 7C may be longer than the dimension of the crosshead body portion 155C in the Z direction.

In addition, the technology shown in Fig. 11A and 11B can be also applied to the crosshead 151D shown in Figs. 8A and 8B. Specifically, if the dimension L1 of the shaft portion 157D in the Z direction serving as the guided portion shown in Figs. 8A and 8B is longer than the dimension L2 of the crosshead body portion 155D in the Z direction, the guide rail 133 shown in Fig. 3 or 4 may be used instead of the plurality of guide rails 133C shown in Fig. 8A and 8B.

### Reference Signs List

- 100:: mold clamping unit
- 110:: stationary platen
- 120:: movable platen
- 130:: toggle support
- 131:: toggle support body portion
- 132:: toggle support arm portion
- 133:: guide rail (guide)
- 133D:: guide
- 134:: guide holder
- 139D:: guide unit
- 150:: toggle mechanism
- 151:: crosshead
- 152:: first link
- 153:: second link
- 154:: third link
- 155:: crosshead body portion
- 156:: link attachment portions
- 157:: slider portion (guided portion)
- 157D:: shaft portion (guided portion)
- 160:: mold clamping motor
- 170:: motion conversion mechanism
- 171:: screw shaft
- 172:: screw nut
- 200:: ejector unit
- 210:: ejector motor
- 220:: motion conversion mechanism
- 230:: ejector rod

## Claims

1. An injection molding machine comprising:
a toggle mechanism (150); and
a toggle support (130) which supports the toggle mechanism (150),
wherein
the toggle mechanism (150) includes a crosshead (151) and a link group (152, 153, 154) which is operated by a forward or rearward movement of the crosshead (151),
**characterized in that**
the toggle support (130) includes a toggle support body portion (131) to which a link of the link group (152, 153, 154) is oscillatingly attached and toggle support arm portions (132) which guide the crosshead (151), and
when viewed in a forward or rearward movement direction of the crosshead (151), the toggle support arm portions (132) come into contact with the crosshead (151) from an outside and in line symmetry about a straight line (YL) passing through a center (159) of the crosshead (151) and extending in a vertical direction.

2. The injection molding machine according to claim 1, wherein when viewed in the forward or rearward movement direction of the crosshead (151), the toggle support arm portions (132) come into contact with an outer peripheral portion of the crosshead (151) to support and guide the crosshead (151).

3. The injection molding machine according to claim 1 or 2,
wherein the toggle mechanism (150) includes the crosshead (151) which moves forward or rearward in a first direction and a pair of the link groups (152, 153, 154) which is provided with a gap in a second direction perpendicular to the first direction.

4. The injection molding machine according to claim 3, wherein when viewed in the first direction, the toggle support arm portions (132) come into contact with the crosshead (151) in line symmetry about the straight line (YL) passing through the center (159) of the crosshead (151) and extending in the second direction.

5. The injection molding machine according to claim 3 or 4,
wherein when viewed in the first direction, the toggle support arm portions (132) come into contact with the crosshead (151) in line symmetry about a straight line (XL) passing through the center (159) of the crosshead (151) and extending in a third direction perpendicular to the first direction and the second direction.

6. The injection molding machine according to any one of claims 3 to 5,
wherein each of the toggle support arm portions (132) includes a retaining portion (136) which prevents the crosshead (151) from coming off from the toggle support arm portions (132) in a third direction perpendicular to the first direction and the second direction.

7. The injection molding machine according to any one of claims 1 to 6, further comprising:
a motor (160) which operates the toggle mechanism (150); and
a motion conversion mechanism (170) which converts a rotary motion of the motor (160) into a linear motion of the crosshead (151),
wherein the crosshead (151) includes a crosshead body portion (155) to which the motion conversion mechanism (170) is attached, a link attachment portion (156) to which a link of the link group (152, 153, 154) is oscillatingly attached, and a guided portion (157) which is guided by the toggle support arm portions (132).

8. The injection molding machine according to claim 7,
wherein the toggle support arm portions (132) include a pair of guide rails (133) that guides the guided portion (157) and is provided with a gap in a guide direction of the guided portion (157), and
wherein the guided portion (157) includes a shaft portion (157D) which is guided by the pair of guide rails (133).

9. The injection molding machine according to claim 8,
wherein the pair of guide rails (133) provided with a gap in the guide direction of the guided portion (157) constitutes a guide unit (139D), and
wherein a dimension of the guide unit (139D) in the guide direction is longer than a dimension of the crosshead body portion (155) in the guide direction.

## Patentansprüche

1. Spritzgießmaschine, umfassend:
einen Kniehebelmechanismus (150); und
einen Kniehebelträger (130), der den Kniehebelmechanismus (150) trägt,
wobei
der Kniehebelmechanismus (150) einen Kreuzkopf (151) und eine Bindegliedgruppe (152, 153, 154), die über eine Vorwärts- oder Rückwärtsbewegung des Kreuzkopfs (151) betätigt wird, umfasst,
**dadurch gekennzeichnet, dass**
der Kniehebelträger (130) einen Kniehebelträger-Körperabschnitt (131), an dem ein Bindeglied von der Bindegliedgruppe (152, 153, 154) oszillierend angebracht ist, und Kniehebelträger-Armabschnitte (132) umfasst, welche den Kreuzkopf (151) führen, und bei Betrachtung in einer Vorwärts- oder
Rückwärtsrichtung des Kreuzkopfs (151) die Kniehebelträger-Armabschnitte (132) mit dem Kreuzkopf (151) von außen und achsensymmetrisch um eine gerade Linie (YL), die durch einen Mittelpunkt (159) des Kreuzkopfs (151) verläuft und sich in einer vertikalen Richtung erstreckt, in Kontakt kommen.

2. Spritzgießmaschine nach Anspruch 1,
wobei bei Betrachtung in der Vorwärts- oder Rückwärtsrichtung des Kreuzkopfs (151) die Kniehebelträger-Armabschnitte (132) mit einem Außenumfangsabschnitt des Kreuzkopfs (151) in Kontakt kommen, um den Kreuzkopf (151) zu tragen und zu führen.

3. Spritzgießmaschine nach Anspruch 1 oder 2,
wobei der Kniehebelmechanismus (150) den Kreuzkopf (151), der sich in einer ersten Richtung vorwärts oder rückwärts bewegt, und ein Paar der Bindegliedgruppen (152, 153, 154), das in einer zweiten Richtung senkrecht zu der ersten Richtung mit einem Spalt versehen ist, umfasst.

4. Spritzgießmaschine nach Anspruch 3,
wobei bei Betrachtung in der ersten Richtung die Kniehebelträger-Armabschnitte (132) mit dem Kreuzkopf (151) achsensymmetrisch um die gerade Linie (YL), die durch den Mittelpunkt (159) des Kreuzkopfs (151) verläuft und sich in der zweiten Richtung erstreckt, in Kontakt kommen.

5. Spritzgießmaschine nach Anspruch 3 oder 4,
wobei bei Betrachtung in der ersten Richtung die Kniehebelträger-Armabschnitte (132) mit dem Kreuzkopf (151) achsensymmetrisch um eine gerade Linie (XL), die durch den Mittelpunkt (159) des Kreuzkopfs (151) verläuft und sich in einer dritten Richtung senkrecht zu der ersten Richtung und zu der zweiten Richtung erstreckt, in Kontakt kommen.

6. Spritzgießmaschine nach einem der Ansprüche 3 bis 5, wobei jeder der Kniehebelträger-Armabschnitte (132) einen Sicherungsabschnitt (136) umfasst, der verhindert, dass sich der Kreuzkopf (151) in einer dritten Richtung senkrecht zu der ersten Richtung und zu der zweiten Richtung von den Kniehebelträger-Armabschnitten (132) löst.

7. Spritzgießmaschine nach einem der Ansprüche 1 bis 6, ferner umfassend:
einen Motor (160), der den Kniehebelmechanismus (150) betätigt, und
einen Bewegungsumwandlungsmechanismus (170), der eine Drehbewegung des Motors (160) in eine lineare Bewegung des Kreuzkopfs (151) umwandelt,
wobei der Kreuzkopf (151) einen Kreuzkopf-Körperabschnitt (155), an dem der Bewegungsumwandlungsmechanismus (170) angebracht ist, einen Bindegliedbefestigungsabschnitt (156), an dem ein Bindeglied der Bindegliedgruppe (152, 153, 154) oszillierend angebracht ist, und einen geführten Abschnitt (157), der von den Kniehebelträger-Armabschnitten (132) geführt wird, umfasst.

8. Spritzgießmaschine nach Anspruch 7,
wobei die Kniehebelträger-Armabschnitte (132) ein Paar Führungsschienen (133) umfassen, das den geführten Abschnitt (157) führt und in einer Führungsrichtung des geführten Abschnitts (157) mit einem Spalt versehen ist, und
wobei der geführte Abschnitt (157) einen Schaftabschnitt (157D) umfasst, der von dem Paar Führungsschienen (133) geführt wird.

9. Spritzgießmaschine nach Anspruch 8,
wobei das Paar Führungsschienen (133), das mit einem Spalt in der Führungsrichtung des geführten Abschnitts (157) versehen ist, eine Führungseinheit (139D) darstellt, und
wobei eine Abmessung der Führungseinheit (139D) in der Führungsrichtung länger ist als eine Abmessung des Kreuzkopf-Körperabschnitts (155) in der Führungsrichtung.

## Revendications

1. Une machine de moulage par injection comprenant :
un mécanisme à bascule (150) ; et
un support à bascule (130) qui supporte le mécanisme à bascule (150) ;
dans laquelle
le mécanisme à bascule (150) inclut un coulisseau (151) et un groupe de liaison (152, 153, 154) qui est actionné par un déplacement vers l'avant ou vers l'arrière du coulisseau (151),
**caractérisée en ce que**
le support à bascule (130) inclut une partie formant corps de support à bascule (131) à laquelle une liaison du groupe de liaison (152, 153, 154) est fixée de manière oscillante et des parties formant bras de support à bascule (132) qui guident le coulisseau (151), et
lorsqu'elles sont observées dans une direction de déplacement vers l'avant ou vers l'arrière du coulisseau (151), les parties formant bras de support à bascule (132) viennent en contact avec le coulisseau (151) depuis un extérieur et en symétrie axiale autour d'une ligne droite (YL) passant par un centre (159) du coulisseau (151) et s'étendant dans une direction verticale.

2. La machine de moulage par injection selon la revendication 1,
dans laquelle, lorsqu'elles sont observées dans la direction de déplacement vers l'avant ou vers l'arrière du coulisseau (151), les parties formant bras de support à bascule (132) viennent en contact avec une partie périphérique externe du coulisseau (151) pour supporter et guider le coulisseau (151).

3. La machine de moulage par injection selon la revendication 1 ou 2,
dans laquelle le mécanisme à bascule (150) inclut le coulisseau (151) qui se déplace vers l'avant ou vers l'arrière dans une première direction et une paire de groupes de liaison (152, 153, 154) qui est pourvue d'un espace dans une deuxième direction perpendiculaire à la première direction.

4. La machine de moulage par injection selon la revendication 3,
dans laquelle lorsqu'elles sont observées dans la première direction, les parties formant bras de support à bascule (132) viennent en contact avec le coulisseau (151) en symétrie axiale autour de la ligne droite (YL) passant par le centre (159) du coulisseau (151) et s'étendant dans la deuxième direction.

5. La machine de moulage par injection selon la revendication 3 ou 4,
dans laquelle, lorsqu'elles sont observées dans la première direction, les parties formant bras de support à bascule (132) viennent en contact avec le coulisseau (151) en symétrie axiale autour d'une ligne droite (XL) passant par le centre (159) du coulisseau (151) et s'étendant dans une troisième direction perpendiculaire à la première direction et la deuxième direction.

6. La machine de moulage par injection selon l'une quelconque des revendications 3 à 5,
dans laquelle chacune des parties formant bras de support à bascule (132) inclut une partie de retenue (136) qui empêche le coulisseau (151) de se détacher des parties formant bras de support à bascule (132) dans une troisième direction perpendiculaire à la première direction et la deuxième direction.

7. La machine de moulage par injection selon l'une quelconque des revendications 1 à 6, comprenant en outre :
un moteur (160) qui actionne le mécanisme à bascule (150) ; et
un mécanisme de conversion de mouvement (170) qui convertit un mouvement rotatif du moteur (160) en un mouvement linéaire du coulisseau (151),
dans laquelle le coulisseau (151) inclut une partie formant corps de coulisseau (155) à laquelle le mécanisme de conversion de mouvement (170) est fixé, une partie de fixation de liaison (156) à laquelle une liaison du groupe de liaisons (152, 153, 154) est fixée de manière oscillante, et une partie guidée (157) qui est guidée par les parties formant bras de support à bascule (132).

8. La machine de moulage par injection selon la revendication 7, dans laquelle les parties formant bras de support à bascule (132) incluent une paire de glissières (133) qui guide la partie guidée (157) et est pourvue d'un espace dans une direction de guidage de la partie guidée (157), et
dans laquelle la partie guidée (157) inclut une partie formant arbre (157D) qui est guidée par la paire de glissières (133).

9. La machine de moulage par injection selon la revendication 8,
dans laquelle la paire de glissières (133) pourvue d'un espace dans la direction de guidage de la partie guidée (157) constitue une unité de guidage (139D), et
dans laquelle une dimension de l'unité de guidage (139D) dans la direction de guidage est plus longue qu'une dimension de la partie formant corps de coulisseau (155) dans la direction de guidage.
